# EUROPEAN PATENT APPLICATION

(11) **EP 4 376 428 A1**
(43) Date of publication of application: **29.05.2024**
(21) Application number: 22860329.6
(22) Date of filing: 16.08.2022
(51) Int. Cl.: H04N 23/60, H04N 5/265

(54) **VIDEO RECORDING METHOD AND DEVICE, STORAGE MEDIUM, AND PROGRAM PRODUCT**

(30) Priority: 23.08.2021 CN 202110967164
(71) Applicant: Beijing Zitiao Network Technology Co., Ltd., Beijing 100190 (CN)
(72) Inventor: LI, Mingyi, Beijing 100086 (CN)
(74) Representative: Dentons UK and Middle East LLP
(86) International application number: PCT/CN2022/112888
(87) International publication number: WO 2023/024983

(57) **Abstract**

A method, device, storage medium and program product for video recording provided in the present disclosure relate to video processing technology. The method of video recording includes: in response to a shooting initiation instruction, placing a video frame image collected by a camera into a first video track, and displaying the video frame image in the first video track; in response to a playing instruction for a second video, placing a video frame image of the second video into a second video track, and displaying the video frame image in the second video track; in response to a pausing playing instruction for the second video, pausing placing the video frame image of the second video into the second video track, so that the video frame image placed before pausing play of the second video is retained in the second video track; and in response to a recording instruction, synthesizing the video frame image in the first video track with the video frame image in the second video track to obtain a video frame image of a recorded video. The solution provided in the present application can improve the flexibility in video co-shooting of the intelligent terminal.

## Description

### CROSS-REFERENCE OF RELATED APPLICATIONS

This application claims priority to the Chinese Patent Application filed on August 23, 2021, with application No. 202110967164.1, entitled "method, device, storage medium and program product for video recording", the entirety of which is incorporated herein by reference.

### TECHNICAL FIELD

The embodiments of the present disclosure relate to video processing technology, and more particularly to a method, device, storage medium and program product for video recording.

### BACKGROUND

Currently, with the development of intelligent terminal technology, there are more and more types of applications on intelligent terminals. For example, there is a type of application with video synthesis function.

When the intelligent terminal runs an application, it can play the existing video, shoot the video, and then synthesize the played video screen and the shot video screen to obtain a recorded video screen.

However, in this case, the preview play of the shot video, the play of the existing video, and the recording action must be synchronized. When the recording starts, the video is played at the same time, and when the recording is paused, the play of the video is also paused at the same time. In a synthesized image obtained, both the shot video and the existing video are in playing state, resulting in a single synthesized image, which cannot meet the diverse needs of users for the synthesized video.

### SUMMARY

The present disclosure provides a video recording method, apparatus, storage medium, computer program product and a computer program, so as to generate a synthesized video to meet the diverse needs of users.

In a first aspect, the present embodiment provides a video recording method, comprising:
in response to a shooting initiation instruction, placing a video frame image collected by a camera into a first video track, and displaying the video frame image in the first video track;
in response to a playing instruction for a second video, placing a video frame image of the second video into a second video track, and displaying the video frame image in the second video track;
in response to a pausing playing instruction for the second video, pausing placing the video frame image of the second video into the second video track, so that the video frame image placed before pausing play of the second video is retained in the second video track; and
in response to a recording instruction, synthesizing the video frame image in the first video track with the video frame image in the second video track to obtain a video frame image of a recorded video.

In a second aspect, the present embodiment provides an apparatus for synthesizing a video, comprising:
a shooting unit configured to, in response to a shooting initiation instruction, place a video frame image collected by a camera into a first video track, and display the video frame image in the first video track;
a playing unit configured to, in response to a playing instruction for a second video, place a video frame image of the second video into a second video track, and display the video frame image in the second video track;
a pausing playing unit configured to, in response to a pausing playing instruction for the second video, pause placing the video frame image of the second video into the second video track, so that the video frame image placed before pausing the play of the second video is retained in the second video track; and
a recording instruction configured to, in response to a recording instruction, synthesize the video frame image in the first video track with the video frame image in the second video track to obtain a video frame image of a recorded video.

In a third aspect, the present disclosure provides an electronic device, including: at least one processor and memory;
the memory stores computer executable instructions;
the at least one processor executes computer executable instructions stored in the memory to cause the at least one processor to perform the method described in the first aspect and various possible designs of the first aspect.

In a fourth aspect, the present disclosure provides a computer-readable storage medium, the computer-readable storage medium stores computer executable instructions, when a processor the computer executable instructions, the methods described in the first aspect and various possible designs of the first aspect are implemented.

In a fifth aspect, the present disclosure provides a computer program product including a computer program, when being executed by a processor, the computer program implements the method in the first aspect and various possible designs of the first aspect.

In a sixth aspect, the present disclosure provides a computer program, when being executed by a processor, the computer program implements the method in the first aspect and various possible designs of the first aspect.

The video recording method, apparatus, storage medium, and program product provided in the present disclosure include: in response to a shooting initiation instruction, placing a video frame image collected by a camera into a first video track, and displaying the video frame image in the first video track; in response to a playing instruction for a second video, placing a video frame image of the second video into a second video track, and displaying the video frame image in the second video track; in response to a pausing playing instruction for the second video, pausing placing the video frame image of the second video into the second video track, so that the video frame image placed before pausing the play of the second video is retained in the second video track; and in response to a recording instruction, synthesizing the video frame image in the first video track with the video frame image in the second video track to obtain a video frame image of a recorded video. In the technical solution provided in the present application, the playing state of the second video can be controlled during co-shooting, and the intelligent terminal adds a video frame image of the second video that matches the video playing state to the synthesized video when the playing state of the second video is different, so as to improve the flexibility in video co-shooting of the intelligent terminal.

### BRIEF DESCRIPTION OF THE DRAWINGS

In order to more clearly illustrate the technical solutions in the embodiments of the present disclosures or prior art, the following will be a brief introduction to the accompanying drawings required for the description of the embodiments or the prior art. Obviously, the accompanying drawings in the following description relate to some embodiments of the present disclosure. For those of ordinary skill in the art, without creative labor, other drawings can be obtained according to these drawings.
FIG. 1 is an application scenario diagram shown according to an exemplary embodiment.
FIG. 2 is a flowchart one of a method for recording a video shown according to an exemplary embodiment of the present application.
FIG. 3 is a flowchart of a process of generating a recorded image shown according to an exemplary embodiment of the present application.
FIG. 4 is a flowchart two of the method for recording a video shown according to an exemplary embodiment of the present application.
FIG. 5 is a structural schematic diagram one of an apparatus for synthesizing a video shown according to an exemplary embodiment of the present application.
FIG. 6 is a structural schematic diagram two of the video apparatus for synthesizing a video shown according to an exemplary embodiment of the present application.
FIG. 7 is a structural diagram of an electronic device shown according to an embodiment of the present application.

### DETAILED DESCRIPTION

In order to make the purpose, technical solution, and advantages of the embodiments of the present disclosure clearer, the technical solution in the embodiments of the present disclosure will be clearly and completely described below in conjunction with the accompanying drawings in the embodiments of the present disclosure. Obviously, the described embodiments are part of the embodiments of the present disclosure, not all embodiments. Based on the embodiments in the present disclosure, all other embodiments obtained by those skilled in the art without creative labor are within the scope of protection of the embodiments of the present disclosure.

With the development of intelligent terminals, the functions of applications applied to intelligent terminals become more and more abundant. For example, an existing video can be mixed with a recorded video to obtain a synthesized video file.

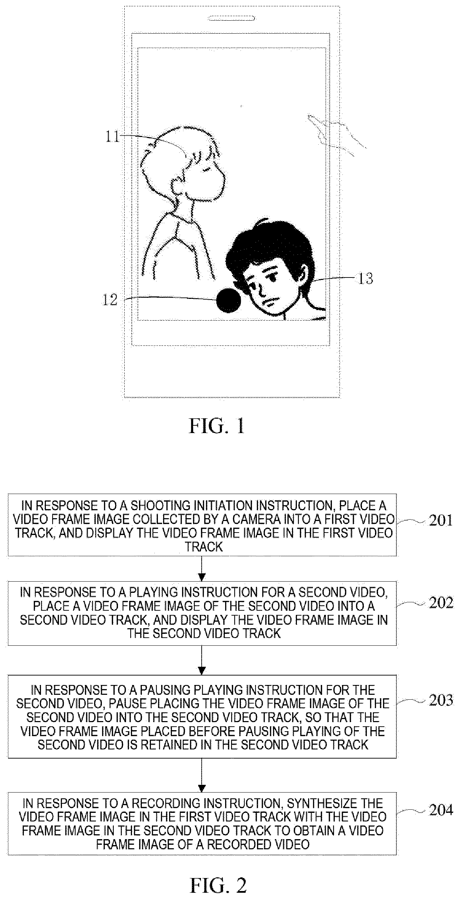

FIG. 1 is an application scenario diagram shown according to an exemplary embodiment.

As shown in FIG. 1, video files can be played in the user terminal, for example, a picture 11 of the video file can be displayed in an interface of the user terminal. A record button 12 may also be provided in the user terminal, and the user may click the record button 12 to trigger a synthesized video generation function of the user terminal.

When the user clicks the record button 12 to transmit to the user terminal an instruction to start recording, the user terminal may play the video file and initiate the camera to collect shot pictures 13, and synthesize the played video pictures 11 and the shot pictures 13 to obtain the synthesized video.

When the user clicks the record button 12 again, an instruction to terminate the recording can be transmitted to the user terminal, and the user terminal may stop playing the video file and stop obtaining the recorded pictures, thereby stopping generating the synthesized pictures.

However, this way of generating a synthesized video is too simplistic and cannot meet the diverse needs of users for synthesized videos. For example, if there is a need not to continue playing video file during recording, the need may not be met.

In order to solve the above technical problems, the present application provides a solution in which the recording state and the playing state of the multimedia file are controlled respectively, so that according to the playing state of the multimedia file, data can be written into the synthesized video file, thus diverse video synthesis methods are provided according to user operations to meet user requests.

FIG. 2 is a flowchart one of a method for recording a video shown according to an exemplary embodiment of the present application.

As shown in FIG. 2, the method for recording a video provided in this application includes:
Step 201, in response to a shooting initiation instruction, placing a video frame image collected by a camera into a first video track, and displaying the video frame image in the first video track;
The method provided in the present embodiment may be performed by an electronic device having a computing function, such as an intelligent terminal. The intelligent terminal may have a video playing function, and it may also have a recording function.

The intelligent terminal may synthesize recorded pictures and video pictures to obtain a synthesized video file.

Specifically, the user may operate the intelligent terminal to trigger the video recording function of the intelligent terminal. For example, the user may click the shooting button in the intelligent terminal to transmit a shooting initiation instruction to the intelligent terminal.

Furthermore, the intelligent terminal may respond to the shooting initiation instruction and collect video frame images through camera. For example, the camera of the intelligent terminal can be initiated to take images through the camera.

In practical application, when the intelligent terminal collects a video frame image through the camera, it may place the video frame image collected by the camera into the first video track. The video track refers to an abstraction of the images recorded in the video file at the software layer. The intelligent terminal may include a first video track for recording the images collected by the camera.

The intelligent terminal may also display the video frame image in the first video track, for example, the intelligent terminal may obtain images frame by frame from the first video track and display them in the display apparatus. The display apparatus can specifically be a screen of the intelligent terminal.

Step 202, in response to a playing instruction for a second video, placing a video frame image of the second video into a second video track, and displaying the video frame image in the second video track.

The user may also pre-select the second video, for example, before initiating the shooting function, the user may first select a second video and use the second video as a co-shot video.

Specifically, the user may also operate the intelligent terminal to play the second video. For example, the user may click a button set on the intelligent terminal for playing the second video, so that the intelligent terminal receives the playing instruction for the second video.

Furthermore, the intelligent terminal can respond to the playing instruction for the second video, and place the video frame image of the second video into the second video track. Specifically, the video frame image of the second video can be placed into the second video track frame by frame. The intelligent terminal may also be provided with the second video track.

In practical application, the intelligent terminal may also display the video frame image in the second video track, for example, the images may be obtained from the second video track frame by frame and displayed on the display apparatus. The display apparatus can specifically be the screen of the intelligent terminal.

In practical application, the intelligent terminal may obtain images from the first video track and the second video track respectively, then the obtained images are decoded respectively, and the decoded data is then encoded to obtain encoded data including a collected picture and a picture in the second video. Then, it may be displayed in the screen of the intelligent terminal according to the encoded data.

Step 203, in response to a pausing playing instruction for the second video, pausing placing the video frame image of the second video into the second video track, so that the video frame image placed before pausing the play of the second video is retained in the second video track.

The user may also operate the intelligent terminal to transmit a pausing playing instruction for the second video to the intelligent terminal. For example, the user may operate a button in the intelligent terminal for pausing play of the second video, thereby triggering the intelligent terminal to pause the play of the second video.

Specifically, if the intelligent terminal receives a pausing playing instruction for the second video, placing the video frame image of the second video into the second video track is paused, so that the video frame image placed before pausing the play of the second video is retained in the second video track.

It should be noted that if the user does not operate the intelligent terminal to pause the play of the second video, step 203 may not be performed.

Step 204, in response to a recording instruction, synthesizing the video frame image in the first video track with the video frame image in the second video track to obtain a video frame image of a recorded video.

Furthermore, the user may operate the intelligent terminal to trigger the terminal to start recording videos. For example, if the user wants to record a co-shot video, he/she may click the record button in the intelligent terminal to trigger the intelligent terminal to perform this step.

In practical application, after the intelligent terminal receives the recording instruction, the intelligent terminal may encode the video image in the first video track and the video frame image in the second video track, and write the encoded data into the file to obtain video frame image of the recorded video.

The intelligent terminal may obtain the latest added image from the first video track and the latest added image from the second video track, thereby encoding the two frame images to generate a recording file.

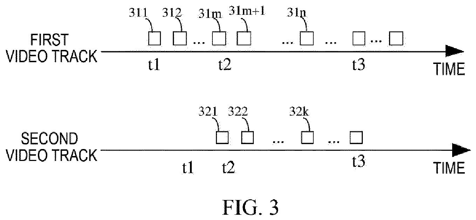

FIG. 3 is a flowchart of a process of generating a recorded image shown according to an exemplary embodiment of the present application.

The present embodiment uses a multimedia file as a video file for illustration. As shown in FIG. 3,

At time t1, the intelligent terminal initiates a shooting function. The intelligent terminal may use a camera to collect video frame images and place the video frame images frame by frame into the first video track. For example, the first frame picture 311, the second frame picture 312... and the nth frame picture 31n are placed into the first video track frame by frame. The intelligent terminal may also display images placed into the first video track frame by frame.

At time t2, the intelligent terminal starts playing the second video, and the intelligent terminal may obtain the video frame images frame by frame from the second video. For example, when the intelligent terminal obtains a mth frame recording picture 31m, the intelligent terminal receives the playing instruction, and the intelligent terminal may obtain the first frame video picture 321 from the second video when collecting the mth frame picture; the intelligent terminal obtains the second frame video picture 322 from the second video when collecting the m+lth frame picture 31m + 1; and the intelligent terminal also obtains the kth frame video picture 32k from the multimedia file when obtaining the nth frame recording picture 31n. The intelligent terminal may add the obtained video pictures into the second video track.

At the same time, the intelligent terminal may also display the pictures added into the second video track on the screen.

At time t3, when the intelligent terminal stops playing the second video, the intelligent terminal will no longer place pictures into the second video track. For example, at time t3, if the intelligent terminal stops playing the second video, the intelligent terminal will continue to place video frame images into the first video track but stop adding pictures of the second video into the second video track frame by frame.

At time t4, the intelligent terminal initiates the recording function, and the intelligent terminal may synthesize the video frame image in the first video track with the video frame image in the second video track to obtain the video frame image of the recorded video.

When synthesizing video frame images, if the intelligent terminal continuously adds images into the second video track, the latest added image is synthesized with the real-time collected image, and if the intelligent terminal does not add images to the second video track, the real-time collected image will be synthesized with the image latest added into the second video track.

Specifically, if the intelligent terminal not only adds images into the first video track but also adds images to the second video track, the intelligent terminal may display the two images on the screen.

The video recording method provided by the present application includes: in response to a shooting initiation instruction, placing a video frame image collected by a camera into a first video track, and displaying the video frame image in the first video track; in response to a playing instruction for a second video, placing a video frame image of the second video into a second video track, and displaying the video frame image in the second video track; in response to a pausing playing instruction for the second video, pausing placing the video frame image of the second video into the second video track, so that the video frame image placed before pausing the play of the second video is retained in the second video track; and in response to a recording instruction, synthesizing the video frame image in the first video track with the video frame image in the second video track to obtain a video frame image of a recorded video. In the method provided by the present application, the playing state of the second video can be controlled during co-shooting, and when the playing state of the second video is different, the intelligent terminal adds the video frame image of the second video that matches the video playing state to the synthesized video, so as to improve the flexibility in video co-shooting of the intelligent terminal.

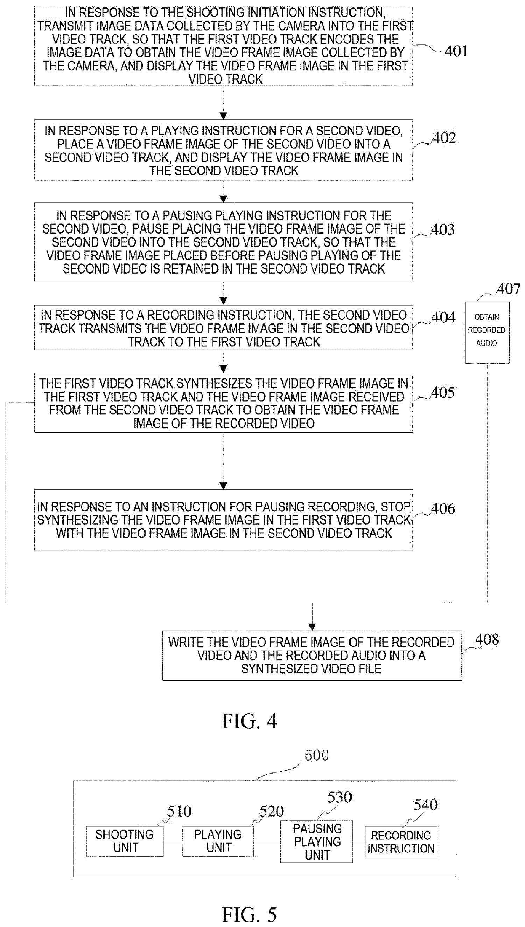

FIG. 4 is a flowchart two of the method for recording a video shown according to an exemplary embodiment of the present application.

As shown in FIG. 4, the method for recording a video includes:
Step 401, in response to the shooting initiation instruction, transmitting image data collected by the camera into the first video track, so that the first video track encodes the image data to obtain the video frame image collected by the camera, and displaying the video frame image in the first video track.

In an alternative embodiment, after receiving a shooting instruction, the intelligent terminal may initiate the camera to collect video frame images using the camera.

The intelligent terminal may transmit video frame images collected by the camera to the first video track, so that the first video track encodes the image data, and the intelligent terminal may also use the encoded data to display image data in the first video track.

Step 402, in response to a playing instruction for a second video, placing a video frame image of the second video into a second video track, and displaying the video frame image in the second video track.

Step 403, in response to a pausing playing instruction for the second video, pausing placing the video frame image of the second video into the second video track, so that the video frame image placed before pausing play of the second video is retained in the second video track.

Steps 402 and 403 are similar to the implementation of steps 202 and 203 and will not be repeated here.

Step 404, in response to a recording instruction, transmitting, by the second video track, the video frame image in the second video track to the first video track.

The user operates the intelligent terminal to initiate the recording function of the intelligent terminal, and the intelligent terminal may control the second video track to transmit the video frame image in the second video track to the first video track.

Specifically, if the intelligent terminal is playing the second video, the intelligent terminal may add second video images frame by frame to the second video track, in this embodiment, images transmitted by the second video track to the first video track are images added frame by frame to the second video track.

Further, if the intelligent terminal pauses playing the second video, the intelligent terminal stops adding images to the second video track, in this embodiment, the image transmitted by the second video track to the first video track is the last image added to the second video track.

Step 405, synthesizing, by the first video track, the video frame image in the first video track and the video frame image received from the second video track to obtain the video frame image of the recorded video.

In practical application, the first video track may process the video frame image therein and the received video frame image. Specifically, the first video track may encode the video frame image therein and the received video frame image to obtain data of the synthesized image, and then obtain the video frame image of the recorded video.

When the intelligent terminal displays an image in the screen, at the start of recording, the collected video image frame may be displayed; if the play of the second video is started, the synthesized image of the real-time collected image and the image played in the second video may be displayed; and if the play of the second video is paused, the synthesized image of the real-time collected image and the image in the second video before pausing the play may be displayed.

Optionally, when the user terminal synthesizes images, the first video track arranges the video frame image in the first video track at a first position in a preset picture, and arranges the video frame image received from the second video track at a second position in the preset picture, to obtain the video frame image of the recorded video. For example, the video frame image in the first video track is arranged in the left area of the preset picture, and the video frame image in the second video track is arranged in the right area of the preset picture.

Step 406, in response to an instruction for pausing recording, stopping synthesizing the video frame image in the first video track with the video frame image in the second video track.

Specifically, the user may also operate the user terminal to transmit an instruction for pausing recording. After receiving the instruction for pausing recording, the user terminal may respond to the instruction and stop synthesizing the video frame image in the first video track with the video frame image in the second video track.

Further, when the user terminal receives the instruction for pausing recording, the user terminal may continue to collect the video frame image using the camera, and place the image into the first video track, and the user terminal may obtain the video frame image from the second video, and display mixed images on the screen.

In practical application, the user terminal does not encode the pictures collected from the first video track and the second video track, so as to stop writing new pictures into the synthesized file to stop recording.

Step 407, obtaining recorded audio.

Step 408, writing the video frame image of the recorded video and the recorded audio into a synthesized video file.

Optionally, the method provided in the present disclosure may further include the step 407. The user terminal may also obtain the recorded audio, for example, the recorded audio may be collected by a microphone.

Optionally, the user terminal may write video frame image of the recorded video obtained by synthetization and the collected recorded audio into the synthesized video file to obtain the recorded file. A picture of the recorded file includes not only the picture in the second video, but also the picture collected by the camera. And the play of the picture in the second video can be paused or continued based on the user's operation, so as to improve the flexibility when the user is performing co-shooting.

Optionally, the user terminal may encode the recorded audio and the video frame image of the recorded video to obtain encoded data, and write the encoded data into the synthesized video file.

When the recording state is that the recording is being performed, the intelligent terminal may encode the synthesized picture and recorded audio at each moment, so as to obtain the encoded data for each moment, and the intelligent terminal may also write the encoded data of each moment into the synthesized video file, thereby generating the synthesized video file.

In an optional implementation, before responding to the shooting initiation instruction, it also includes:
in response to a co-shooting instruction for the second video, displaying a co-shooting interface.

In any of the above embodiments, before responding to a first operation instruction for a recording state to determine the recording state, and responding to a second operation instruction for a playing state of the preset multimedia file to determine the playing state of the multimedia file, the method provided by present embodiment further includes:
in response to a co-shooting instruction for the multimedia file, displaying a co-shooting interface.

The first operation instruction and the second operation instruction are instructions operating in the co-shooting interface.

Specifically, the intelligent terminal may play preset multimedia files, and the user may operate the intelligent terminal to transmit the co-shooting instruction for the multimedia file to the intelligent terminal, so that the intelligent terminal displays the co-shooting interface.

For example, in the playing interface of the preset multimedia file, the co-shooting button can be displayed, and the user can click the co-shooting button to transmit a co-shooting instruction to the intelligent terminal.

FIG. 5 is a structural schematic diagram of an apparatus for synthesizing a video shown in an exemplary embodiment of the present application.

As shown in FIG. 5, the apparatus for synthesizing a video 500 provided in this application includes:
a shooting unit 510 configured to, in response to a shooting initiation instruction, place a video frame image collected by a camera into a first video track, and display the video frame image in the first video track;
a playing unit 520 configured to, in response to a playing instruction for a second video, place a video frame image of the second video into a second video track, and display the video frame image in the second video track;
a pausing playing unit 530 configured to, in response to a pausing playing instruction for the second video, pause placing the video frame image of the second video into the second video track, so that the video frame image placed before pausing play of the second video is retained in the second video track; and
a recording instruction 540 configured to, in response to a recording instruction, synthesize the video frame image in the first video track with the video frame image in the second video track to obtain a video frame image of a recorded video.

The principle, implementation, and effect of the apparatus for synthesizing a video provided in this disclosure are similar to those in the embodiments shown in FIG. 2 and will not be repeated here.

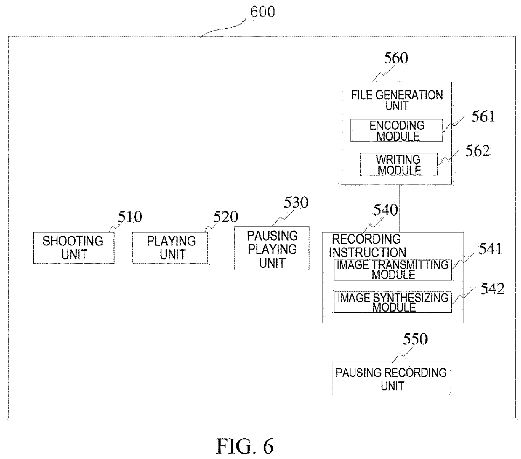

FIG. 6 a structural schematic diagram two of the video apparatus for synthesizing a video shown according to an exemplary embodiment of the present application.

As shown in FIG. 6, based on the above embodiments, in the present application provides an apparatus for synthesizing a video 600, the shooting unit 510 is specifically configured to:
transmit image data collected by the camera to the first video track, so that the first video track encodes the image data to obtain the video frame image collected by the camera.

The recording instruction 540 includes:
an image transmitting module 541 configured to control the second video track to transmit video frame images in the second video track to the first video track;
an image synthesizing module 542 configured to control the first video track to synthesize the video frame image in the first video track and the received video frame image transmitted by the second video track to obtain the video frame image of the recorded video.

The apparatus also includes:
a pausing recording unit 550 configured to, in response to an instruction for pausing recording, stop synthesizing the video frame image in the first video track with the video frame image in the second video track.

The image synthesizing module 542 is specifically configured to:
control the first video track to arrange the video frame image in the first video track at a first position in a preset picture, and arrange the video frame image received from the second video track at a second position in the preset picture, to obtain the video frame image of the recorded video.

The apparatus also includes a file generation unit 560 configured to:
obtain recorded audio; and
write the video frame image of the recorded video and the recorded audio into a synthesized video file.

The file generation unit 560 includes:
an encoding module 561 configured to encoding the recorded audio and the video frame image of the recorded video to obtain encoded data; and
a writing module 562 configured to write the encoded data into the synthesized video file.

Optionally, the apparatus further includes a display unit 570 configured to, before the shooting unit 510 responds to the shooting initiation instruction:
in response to a co-shooting instruction for the second video, display a co-shooting interface.

The present application also provides a computer program product comprising a computer program that, when being executed by a processor, implements any of the methods for recording a video described above.

Apparatuses provided in the present disclosure embodiment can be used to implement the technical solutions of the above-described method embodiments, the implementation principles and technical effects are similar, and thus not repeated here in the embodiments of the present disclosure.

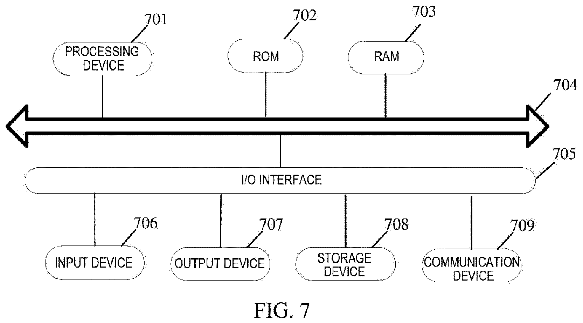

Referring to FIG. 7, it is a structural schematic diagram of an electronic device 700 suitable for implementing the embodiment of the present disclosure, the electronic device 700 may be a terminal device or server. The terminal device may include but is not limited to mobile terminals such as mobile phones, laptops, digital broadcast receivers, Personal Digital Assistants (PDAs), Portable Android Devices (PADs), Portable Multimedia Players (PMPs), car-mounted terminals (such as car navigation terminals), etc. and fixed terminals such as digital televisions (TV), desktop computers, etc. The electronic device shown in FIG. 7 is only an example and should not bring any limitation on the functionality and scope of use of the embodiment of the present disclosure.

As shown in FIG. 7, the electronic device 700 may include a processing apparatus (such as a central processing unit, graphics processing unit, etc.) 701, which may perform various appropriate actions and processes based on programs stored in Read-Only Memory (ROM) 702 or placed from storage apparatus 708 into Random Access Memory (RAM) 703. In the RAM 703, various programs and data necessary for the operation of the electronic device 700 are also stored. The processing apparatus 701, ROM 702, and RAM 703 are connected to each other through a bus 704. An Input/Output I/O interface 705 is also connected to the bus 704.

Typically, the following apparatuses can be connected to I/O interface 705: input apparatuses 706 including, for example, touch screens, touchpads, keyboards, mice, cameras, microphones, accelerometers, gyroscopes, etc.; output apparatuses 707 including Liquid Crystal Displays (LCDs), speakers, vibrators, etc.; storage apparatuses 708 including magnetic tapes, hard disks, etc.; and a communication apparatus 709. The communication apparatus 709 may allow the electronic device 700 to communicate with other apparatuses wirelessly or wirelessly to exchange data. Although FIG. 7 shows an electronic device 700 with multiple apparatuses, it shall be understood that it is not required to implement or have all of the apparatuses shown. More or fewer apparatuses can be implemented or provided instead.

In particular, according to embodiments of the present disclosure, the process described above with reference to the flowchart can be implemented as a computer software program. For example, an embodiment of the present disclosure includes a computer program product that includes a computer program carried on a computer-readable medium, where the computer program includes program code for performing the method shown in the flowchart. In such an embodiment, the computer program can be downplaced and installed from a network through the communication apparatus 709, or installed from the storage apparatus 708, or installed from the ROM 702. When the computer program is executed by the processing apparatus 701, the above functions defined in the method of the embodiment of the present disclosure are performed.

It should be noted that the computer-readable medium described above can be a computer-readable signal medium or a computer-readable storage medium, or any combination thereof. The computer-readable storage medium can be, for example, but not limited to, an electrical, magnetic, optical, electromagnetic, infrared, or semiconductor system, apparatus, or device, or any combination thereof. Specific examples of computer-readable storage media may include but are not limited to: an electrical connection with one or more wires, a portable computer disk, a hard disk, Random Access Memory (RAM), Read-Only Memory (ROM), an Erasable Programmable Read-Only Memory (EPROM), flash memory, an optical fiber, a portable Compact Disk Read-Only Memory (CD-ROM), an optical storage device, a magnetic storage device, or any suitable combination thereof. In the present disclosure, a computer-readable storage medium may be any tangible medium containing or storing a program that can be used by an instruction execution system, apparatus, or device, or can be used in combination with an instruction execution system, apparatus, or device. In the present disclosure, a computer-readable signal medium can include a data signal propagated in baseband or as part of a carrier wave, which carries computer-readable program code therein. Such propagated data signals may take many forms, including but not limited to electromagnetic signals, optical signals, or any suitable combination thereof. A computer-readable signal medium may also be any computer-readable medium other than a computer-readable storage medium, which can send, propagate, or transmit programs for use by or in conjunction with instruction execution systems, apparatus, or devices. The program code contained on the computer-readable medium may be transmitted using any suitable medium, including but not limited to: wires, optical cables, Radio Frequency (RF), etc., or any suitable combination thereof.

The computer-readable medium can be included in the electronic device, or it can exist alone without being assembled into the electronic device.

The above-mentioned computer-readable medium carries one or more programs, and when the above-mentioned one or more programs are executed by the electronic device, the electronic device perform the method provided in the embodiments described above.

Computer program codes for performing the operations of the present disclosure may be written in one or more programming languages or a combination thereof, including Object Oriented programming languages - such as Java, Smalltalk, C++, and also conventional procedural programming languages - such as "C" or similar programming languages. The program code may be executed entirely on the user's computer, partially executed on the user's computer, executed as a standalone software package, partially executed on the user's computer and partially on a remote computer, or entirely on a remote computer or server. In the case of involving a remote computer, the remote computer may be any kind of network - including Local Area Network (LAN) or Wide Area Network (WAN) - connected to the user's computer, or may be connected to an external computer (e.g., through an Internet service provider to connect via the Internet).

The flowcharts and block diagrams in the accompanying drawings illustrate the architecture, functions, and operations of possible implementations of the system, method, and computer program product according to various embodiments of the present disclosure. In this regard, each block in a flowchart or block diagram may represent a module, program segment, or portion of code that contains one or more executable instructions for implementing a specified logical function. It should also be noted that in some alternative implementations, the functions marked in the blocks may occur in a different order than those marked in the drawings. For example, two consecutive blocks may actually be executed in parallel, or they may sometimes be executed in reverse order, depending on the function involved. It should also be noted that each block in the block diagrams and/or flowcharts, as well as combinations of blocks in the block diagrams and/or flowcharts, may be implemented using a dedicated hardware-based system that performs the specified function or operations, or may be implemented using a combination of dedicated hardware and computer instructions.

The units described in the embodiments of the present disclosure may be implemented by means of software or hardware, and the name of the unit does not constitute a limitation on the unit itself in a certain case, for example, the first obtaining unit may also be described as "a unit for obtaining at least two internet protocol addresses".

The functions described herein above can be performed at least in part by one or more hardware logic components. For example, without limitation, exemplary types of hardware logic components that may be used include: Field Programmable Gate Arrays (FPGAs), Application Specific Integrated Circuits (ASICs), Application Specific Standard Parts (ASSPs), System on Chip (SOCs), Complex Programmable Logic Devices (CPLDs), and so on.

In the context of this disclosure, a machine-readable medium can be a tangible medium that may contain or store programs for use by or in conjunction with instruction execution systems, apparatuses, or devices. A machine-readable medium may be a machine-readable signal medium or a machine-readable storage medium. A machine-readable medium may include, but are not limited to, electronic, magnetic, optical, electromagnetic, infrared, or semiconductor systems, apparatuses, or devices, or any suitable combination thereof. Specific examples of the machine-readable storage medium may include electrical connections based on one or more wires, portable computer disks, hard disks, Random Access Memory (RAM), Read-Only Memory (ROM), Erasable Programmable Read-Only Memory (EPROM or flash memory), optical fibers, convenient Compact disk Read-Only Memory (CD-ROM), optical storage devices, magnetic storage devices, or any suitable combination thereof.

In a first aspect, according to one or more embodiments of the present disclosure, there is provided a method for recording a video, comprising:
in response to a shooting initiation instruction, placing a video frame image collected by a camera into a first video track, and displaying the video frame image in the first video track;
in response to a playing instruction for a second video, placing a video frame image of the second video into a second video track, and displaying the video frame image in the second video track;
in response to a pausing playing instruction for the second video, pausing placing the video frame image of the second video into the second video track, so that the video frame image placed before pausing play of the second video is retained in the second video track; and
in response to a recording instruction, synthesizing the video frame image in the first video track with the video frame image in the second video track to obtain a video frame image of a recorded video.

According to one or more embodiments of the present disclosure, placing a video frame image collected by a camera into a first video track, including:
transmitting image data collected by the camera to the first video track, so that the first video track encodes the image data to obtain the video frame image collected by the camera.

According to one or more embodiments of the present disclosure, the synthesizing the video frame image in the first video track with the video frame image in the second video track to obtain a video frame image of a recorded video, includes:
transmitting, by the second video track, the video frame image in the second video track to the first video track; and
synthesizing, by the first video track, the video frame image in the first video track and the video frame image received from the second video track to obtain the video frame image of the recorded video.

According to one or more embodiments of the present disclosure, the method further includes:
in response to an instruction for pausing recording, stopping synthesizing the video frame image in the first video track with the video frame image in the second video track.

According to one or more embodiments of the present disclosure,
the synthesizing, by the first video track, the video frame image in the first video track and the video frame image received from the second video track to obtain the video frame image of the recorded video, includes:
arranging, by the first video track, the video frame image in the first video track at a first position in a preset picture, and arranging, by the first video track, the video frame image received from the second video track at a second position in the preset picture, to obtain the video frame image of the recorded video.

According to one or more embodiments of the present disclosure, the method further includes:
obtaining recorded audio; and
writing the video frame image of the recorded video and the recorded audio into a synthesized video file.

According to one or more embodiments of the present disclosure, the writing the video frame image of the recorded video and the recorded audio into a synthesized video file, includes:
encoding the recorded audio and the video frame image of the recorded video to obtain encoded data, and writing the encoded data into the synthesized video file.

According to one or more embodiments of the present disclosure,
before responding to the shooting initiation instruction, the method further includes:
in response to a co-shooting instruction for the second video, displaying a co-shooting interface.

In a second aspect, according to one or more embodiments of the present disclosure, there is provided an apparatus for synthesizing a video, including:
a shooting unit configured to, in response to a shooting initiation instruction, place a video frame image collected by a camera into a first video track, and display the video frame image in the first video track;
a playing unit configured to, in response to a playing instruction for a second video, place a video frame image of the second video into a second video track, and display the video frame image in the second video track;
a pausing playing unit configured to, in response to a pausing playing instruction for the second video, pause placing the video frame image of the second video into the second video track, so that the video frame image placed before pausing play of the second video is retained in the second video track; and
a recording instruction configured to, in response to a recording instruction, synthesize the video frame image in the first video track with the video frame image in the second video track to obtain a video frame image of a recorded video.

According to one or more embodiments of the present disclosure, the shooting unit is configured to transmit image data collected by the camera to the first video track, so that the first video track encodes the image data to obtain the video frame image collected by the camera.

According to one or more embodiments of the present disclosure, the recording instruction includes:
an image transmitting module configured to control the second video track to transmit the video frame image in the second video track to the first video track; and
an image synthesizing module configured to control the first video track to synthesize the video frame image in the first video track and the received video frame image transmitted by the second video track to obtain the video frame image of the recorded video.

According to one or more embodiments of the present disclosure, the apparatus further includes:
a pausing recording unit configured to, in response to an instruction for pausing recording, stopping synthesizing the video frame image in the first video track with the video frame image in the second video track.

The image synthesizing module is specifically configured to:
control the first video track to arrange the video frame image in the first video track at a first position in a preset picture, and arrange the video frame image received from the second video track at a second position in the preset picture, to obtain the video frame image of the recorded video.

According to one or more embodiments of the present disclosure, the apparatus further includes a file generation unit configured to:
obtain recorded audio; and
write the video frame image of the recorded video and the recorded audio into a synthesized video file.

According to one or more embodiments of the present disclosure, the file generation unit includes:
an encoding module configured to encoding the recorded audio and the video frame image of the recorded video to obtain encoded data; and
a writing module configured to write the encoded data into the synthesized video file.

According to one or more embodiments of the present disclosure, the apparatus further includes a display unit configured to, before the shooting unit responds to the shooting initiation instruction:
in response to a co-shooting instruction for the second video, display a co-shooting interface.

In a third aspect, according to one or more embodiments of the present disclosure, there is provided an electronic device including: at least one processor and memory;
the memory stores computer executable instructions;
the at least one processor executes computer executable instructions stored in the memory to cause the at least one processor to perform the method described in the first aspect and various possible designs of the first aspect.

In a fourth aspect, the present disclosure provides a computer-readable storage medium, the computer-readable storage medium stores computer executable instructions, when a processor the computer executable instructions, the methods described in the first aspect and various possible designs of the first aspect are implemented.

In a fifth aspect, the present disclosure provides a computer program product including a computer program, when being executed by a processor, the computer program implements the method in the first aspect and various possible designs of the first aspect.

In a sixth aspect, the present disclosure provides a computer program, when being executed by a processor, the computer program implements the method in the first aspect and various possible designs of the first aspect.

The above description is only embodiments of this disclosure and an explanation of the technical principles used. Those skilled in the art should understand that the scope of the disclosure involved in this disclosure is not limited to technical solutions composed of specific combinations of the above technical features, but should also covers other technical solutions formed by arbitrary combinations of the above technical features or their equivalent features without departing from the above disclosure concept. For example, technical solutions formed by replacing the above features with (but not limited to) technical features with similar functions disclosed in this disclosure.

In addition, although multiple operations are depicted in a specific order, this should not be understood as requiring these operations to be performed in the specific order shown or in a sequential order. In certain environments, multitasking and parallel processing may be advantageous. Similarly, although multiple implementation details are included in the above discussion, these should not be construed as limiting the scope of the present disclosure. Some features described in the context of individual embodiments can also be implemented in combination in a single embodiment. Conversely, multiple features described in the context of a single embodiment can also be implemented in multiple embodiments separately or in any suitable sub-combination.

Although the subject matter has been described in language specific to structural features and/or methodological logical actions, it should be understood that the subject matter defined in the appended claims is not necessarily limited to the specific features or actions described above. On the contrary, the specific features and actions described above are merely example forms of implementing the claims.

## Claims

1. A method of video recording, comprising:
in response to a shooting initiation instruction, placing a video frame image collected by a camera into a first video track, and displaying the video frame image in the first video track;
in response to a playing instruction for a second video, placing a video frame image of the second video into a second video track, and displaying the video frame image in the second video track;
in response to a pausing playing instruction for the second video, pausing placing the video frame image of the second video into the second video track, so that the video frame image placed before pausing play of the second video is retained in the second video track; and
in response to a recording instruction, synthesizing the video frame image in the first video track with the video frame image in the second video track to obtain a video frame image of a recorded video.

2. The method of claim 1, wherein the placing a video frame image collected by a camera into a first video track, comprising:
transmitting image data collected by the camera to the first video track, so that the first video track encodes the image data to obtain the video frame image collected by the camera.

3. The method of claim 1, wherein the synthesizing the video frame image in the first video track with the video frame image in the second video track to obtain a video frame image of a recorded video, comprising:
transmitting, by the second video track, the video frame image in the second video track to the first video track; and
synthesizing, by the first video track, the video frame image in the first video track and the received video frame image transmitted from the second video track to obtain the video frame image of the recorded video.

4. The method of any of claims 1 to 3, further comprising:
in response to an instruction for pausing recording, stopping synthesizing the video frame image in the first video track with the video frame image in the second video track.

5. The method of claim 3, wherein the synthesizing, by the first video track, the video frame image in the first video track and the received video frame image transmitted from the second video track to obtain the video frame image of the recorded video, comprising:
arranging, by the first video track, the video frame image in the first video track at a first position in a preset picture, and arranging, by the first video track, the video frame image received from the second video track at a second position in the preset picture, to obtain the video frame image of the recorded video.

6. The method of any of claims 1 to 5, further comprising:
obtaining recorded audio; and
writing the video frame image of the recorded video and the recorded audio into a synthesized video file.

7. The method of claim 6, wherein the writing the video frame image of the recorded video and the recorded audio into a synthesized video file, comprising:
encoding the recorded audio and the video frame image of the recorded video to obtain encoded data, and writing the encoded data into the synthesized video file.

8. The method of any of claims 1 to 7, wherein, before responding to the shooting initiation instruction, the method further comprising:
in response to a co-shooting instruction for the second video, displaying a co-shooting interface.

9. An apparatus for video synthesizing, comprising:
a shooting unit configured to, in response to a shooting initiation instruction, place a video frame image collected by a camera into a first video track, and display the video frame image in the first video track;
a playing unit configured to, in response to a playing instruction for a second video, place a video frame image of the second video into a second video track, and display the video frame image in the second video track;
a pausing playing unit configured to, in response to a pausing playing instruction for the second video, pause placing the video frame image of the second video into the second video track, so that the video frame image placed before pausing play of the second video is retained in the second video track; and
a recording instruction configured to, in response to a recording instruction, synthesize the video frame image in the first video track with the video frame image in the second video track to obtain a video frame image of a recorded video.

10. An electronic device comprising: at least one processor and memory;
the memory stores computer executable instructions;
the at least one processor executes computer executable instructions stored in the memory to cause the at least one processor to perform a method for recoding a video according to any of claims 1 to 8.

11. A computer-readable storage medium, the computer-readable storage medium stores computer executable instructions, when a processor executes the computer executable instructions, the computer executable instructions implement a method for recoding a video according to any of claims 1 to 8.

12. A computer program product, comprising a computer program, when being executed by a processor, the computer program implements a method for recoding a video according to any of claims 1 to 8.

13. A computer program, when being executed by a processor, the computer program implements a method for recoding a video according to any of claims 1 to 8.
